# EUROPEAN PATENT APPLICATION

(11) **EP 2 441 651 A2**
(43) Date of publication of application: **18.04.2012**
(21) Application number: 11183766.2
(22) Date of filing: 04.10.2011
(51) Int. Cl.: B62D 49/08

(54) **Tractor weight arrangement**

(30) Priority: 14.10.2010 GB 1017368
(71) Applicant: AGCO International GmbH, 8212 Neuhausen am Rheinfall (CH)
(72) Inventor: Heisler, Robert, 87616 Marktoberdorf (DE); Ott, Max, 87616 Marktoberdorf (DE)
(74) Representative: Morrall, Roger

(57) **Abstract**

A tractor belly weight arrangement comprises a weight member (11) designed to be mounted under a tractor chassis (14). The weight member having front raising means in the form of a hook (12) for use in raising the front of the weight to it operation position under the chassis and rear raising means (30) for use in raising the rear of the weight to is operational position under the chassis. Attachment means in the form of bolts (32) are provided for securing the weight member in its operational position under the chassis. The weight is provided with detachable support means (15, 21) for supporting the weight above the ground so hat the front and rear raising means can be engaged to allow weight to be raised to its operational position under the chassis. These support means may conveniently take the form of a first pair of detachable support legs (16) located at the front end of the weight member and a second pair of detachable support legs (22) located at the rear end of the weight member.

## Description

This invention relates to a weight arrangement for use on an agricultural or industrial tractor.

It is becoming increasingly necessary for tractors to carry large amounts of weight to counterbalance heavy and/long implements mounted on the front or rear of the tractor or to ensure that the tractor can operate without excessive slip particularly when undertaking operations in the field. This can lead to bulky additional weights which are often hung on the front of a tractor and which therefore restrict the ability of the tractor to carry front mounted equipment and can even reduce the turning circle of the tractor if a large number of weights are mounted side by side. Also such weights can be difficult to attached and detach from the tractor as they normally require the use of lifting equipment due to their large weight. This can lead to the weights being used when they are not really required. This results in inefficient operation of the tractor.

It is an object of the present invention to provide a weight arrangement which at least reduces some of the above problems.

Thus in accordance with the present invention there is provided a tractor weight arrangement comprising a weight member designed to be mounted under a tractor chassis, and attachment means for securing the weight member in its operational position under the chassis, the arrangement being characterised in that the weight member has front raising means for use in raising the front of the weight to it operation position under the chassis and separate rear raising means for use in raising the rear of the weight to is operational position under the chassis, and in that the weight is provided with detachable support means for supporting the weight above the ground so that the front and rear raising means can be engaged to allow weight to be raised to its operational position under the chassis.

Such an arrangement can be easily attached and detached from the tractor without the use of additional lifting equipment when use of the weight is not required.

The weight may be provided with separate detachable support means at the front and rear end of the weight member.

The detachable support means may comprises a first pair of detachable support legs located at the front end of the weight member and a second pair of detachable support legs located at the rear end of the weight member.

The front raising means may comprise a hook for engagement with a formation provided on the front portion of the tractor chassis.

The rear raising means may comprise formations on the rear detachable support means for engagement by rear draft links of the tractor to allow the rear of the weight member to be raised to its operational position by raising the draft links.

The front and rear detachable support means may be received in recesses in the weight member and may be held therein by pin which are retained in position by a screw retainer.

Conveniently the tractor has a front suspension the height of which can be raised and lowered by the tractor operator, the front raising means being engageable with a cooperating formation on the chassis by the operator lowering the front suspension to engage the front raising means with a cooperating formation on the chassis and then raising the suspension to lift the front of the weight member into its operational position.

The attachment means comprise bolts which extend through holes in the weight member to attach the weight member to the underside of the chassis.

The weight member may include a moveable weight section which can be moved fore and aft relative to the remainder of the weight member to adjust the ballasting of the tractor.

The moveable weight section may be slidable in tracks formed in the remainder of the weight member.

An actuating means may be provided to move the moveable weight section relative to the remainder of the weight member. Conveniently this actuating means may comprise a hydraulic ram or an electric motor driven system for moving the moveable weight section.

The weight member may be provided with additional attachment points to which additional weights or other components can be mounted.

The invention also provides a method of mounting a tractor weight member on the underside of a tractor chassis, said method comprising lowering a front axle of the tractor to engage front raising means on the weight member with a cooperating formation on the front of the chassis, raising the suspension to raise the front of the weight member into its operational position against the underside of the chassis, engaging rear draft links of the tractor with rear raising means on the weight member, raising the draft links to raise the rear of the weight member into its operational position against the underside of the chassis, and securing the weight member to the underside of the chassis using attachment means.

The weight member may be initially supported above the ground on detachable support means which are disconnected from the weight member after the weight member has been secured to the chassis.

The present invention will now be described, by way example only, with reference to the accompanying drawings in which:-
Figure 1 shows a tractor being driven over a weight arrangement in accordance with the present invention;
Figure 2 shows the front suspension of the tractor lowered so that the front of the weight can be attached to the tractor chassis;
Figure 3 shows the front suspension raised to raise the weight;
Figure 4 shows the rear of the weight being attached to the tractor draft links so it can also be raised in to its operational position;
Figure 5 shows the weight raised at the front and rear in to its operational position against the underside of the tractor chassis;
Figure 6 shows the weight with the detachable support means at the front and rear of the weight having been removed;

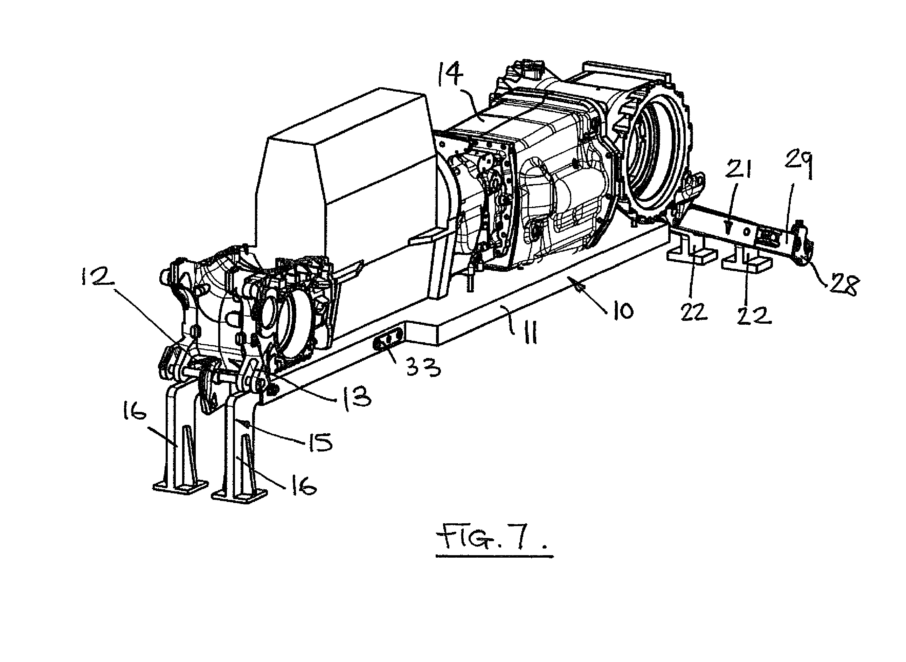

Figure 7 shows a perspective and somewhat diagrammatic view of the weight in its operational position with the front and rear support means still in position;
Figures 8a, 8b, 8c and 8d show details of the attachment of the front and rear support means to the weight;
Figures 9a and 9b show details of the attachment of the weight to the underside of the tractor chassis using bolts;

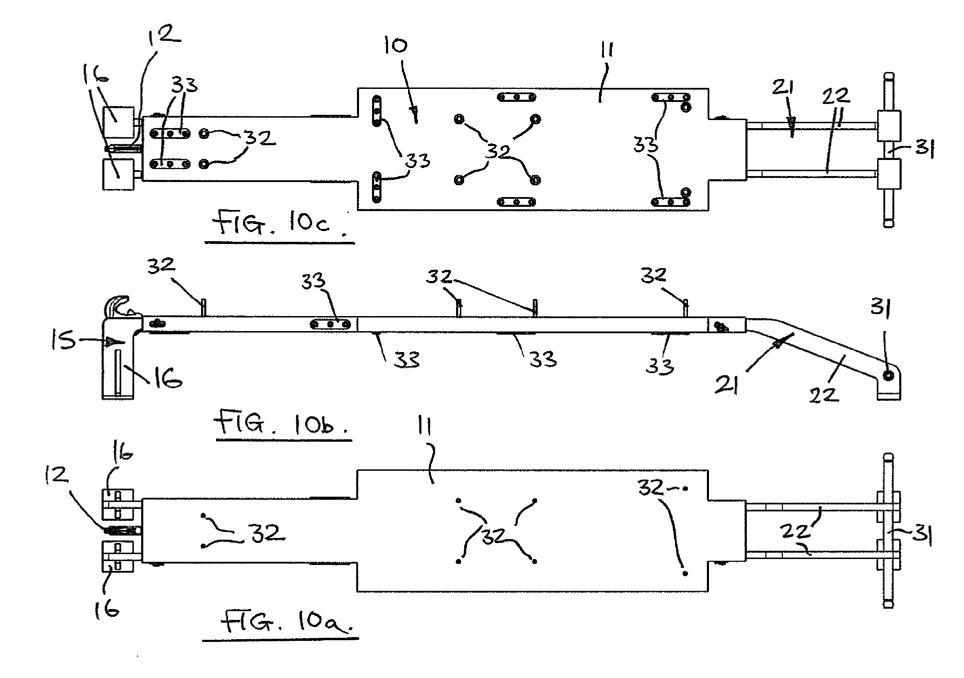

Figures 10a, 10b and 10c show plan, side view and underplan view of the weight and its front and rear support means;

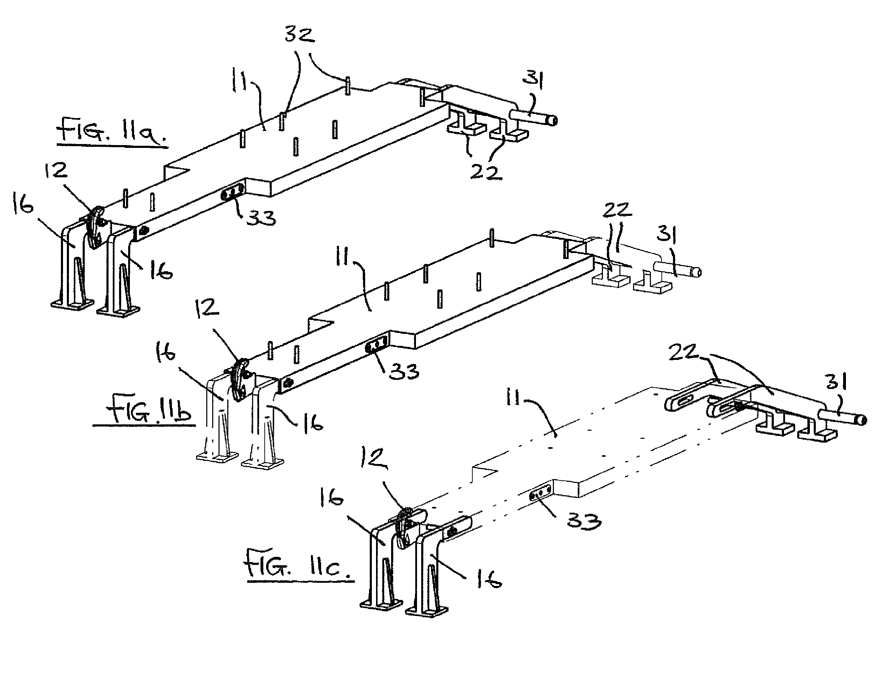

Figures 11a, 11b and 11c show perspective views of the weight and its detachable support means;
Figure 12 shows the weight in position on the tractor with additional weights attached beneath the belly weight, and
Figures 13,14 and 15 show perspective and sectional views of an alternative belly weight arrangement which has a moveable weight section which can be slid in a fore and aft sense in order to adjust the ballasting of the tractor.

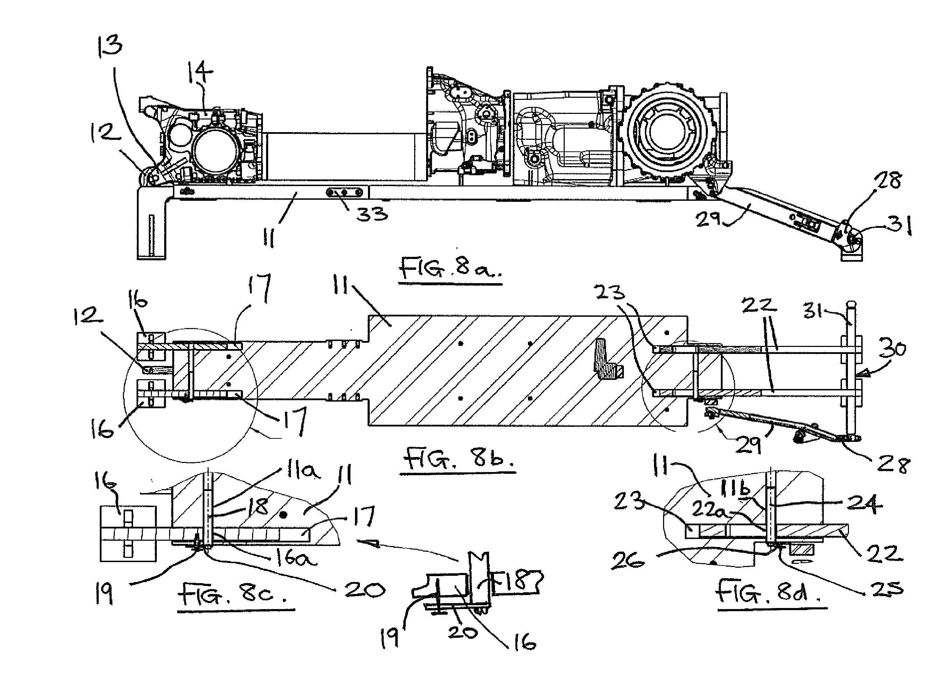

Referring to the drawings, a tractor belly weight arrangement 10 comprises a main weight member 11 which can be machined from a thick plate member or can be of a cast construction. The weight member 11 has at its front end a front raising means in the form of a hook 12 which can be engaged with a co-operating formation provided on a front portion 13 of the tractor chassis 14. The weight member 11 is provided with detachable front support means 15 in the form of a pair of legs 16 which, as shown in Figures 8a to 8c are received in recesses 17 formed in the front portion of weight member 11. The legs 16 are retained in their recesses by pins 18 which extend through bores 16a and 11a in the legs 16 and weight member 11 respectively. The pins 18 are held in position by screw fastenings 19 which extend through plates 20 attached to the ends of pins 18.

At the rear of the weight member 11 a rear support means 21 is provided in the form of a further pair of angled legs 22 which are again received in recesses 23 provided in the rear of weight member 11 and held in these recesses by pins 24 which extend through bores 22a and 11 b in the legs 22 and weight member 11 respectively and are again held in position by screw fasteners 25 which extend through plates 26 secured to the pins 24. The rear of the weight member I 1 can be raised to its operational position beneath the chassis 14 by engaging the hooks 28 of the rear draft links 29 of the tractor with rear raising means 30 provided in the form of a cross bar 31 secured between the angled rear legs 22. The draft links are then raised to raise the rear of the weight member 11 in to its operational position. Once the front and rear of the weight member have been raised in to their operational positions in contact with the underside of the tractor chassis 14 the weight is secured to the chassis by bolts 32 which extend through the weight member 11 into the chassis 14.

After the weight has been secured to the chassis by bolts 32 the front support legs 16 are released from the weight by removing the screw fasteners 19 and the pins 18 and similarly the rear support legs 22 are released by releasing the screw fastenings 25 and the associated pins 24. The weight is then its full operational position below the tractor.

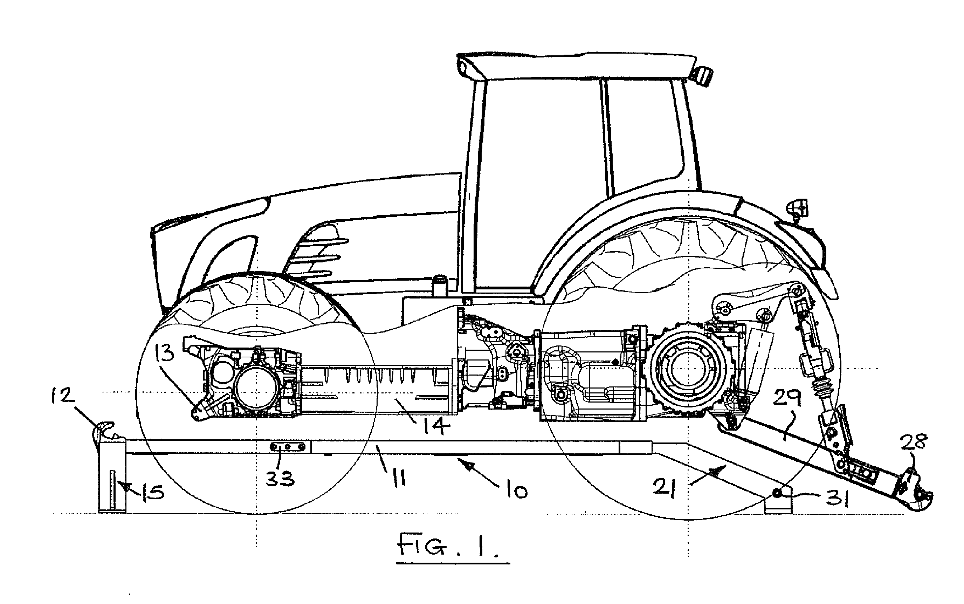

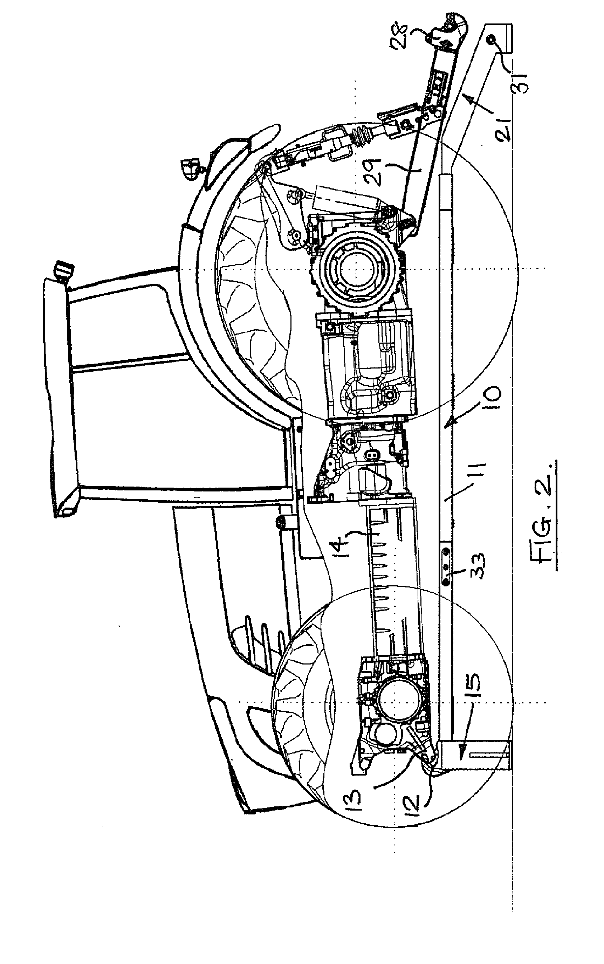

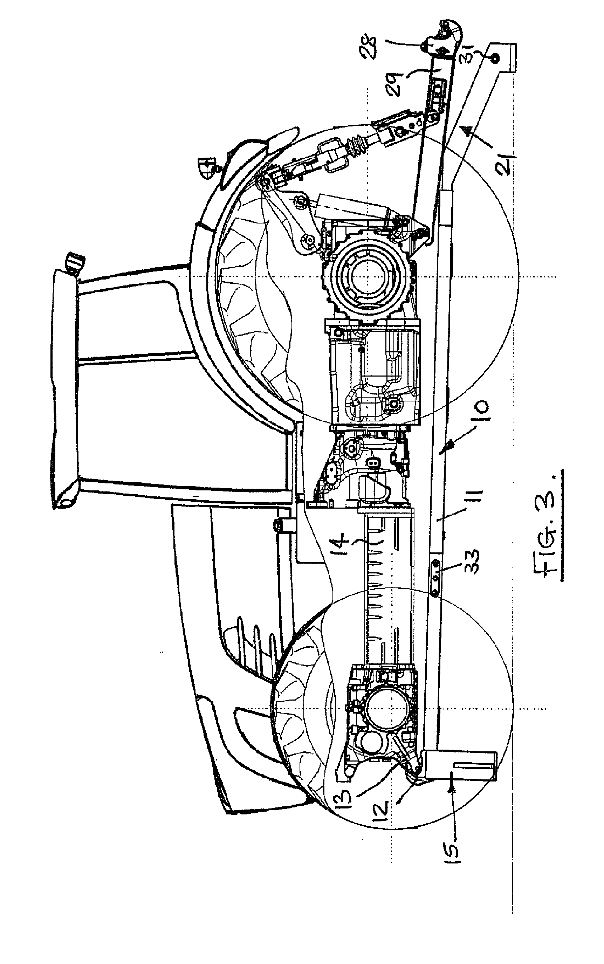

The various stages in the attachment sequence of the weight to the tractor are shown in Figures 1 to 6. In Figure 1 the tractor is driven above the weight member 11 which is supported from the front support legs 16 and rear support legs 22. The front axle is then lowered so that the front raising hook 12 can be engaged with the co-operating front formation 13 on the tractor chassis. This is shown in Figure 2. The front axle is then raised to its normal operating height so that the front legs 16 are now raised from the ground as shown in Figure 3.

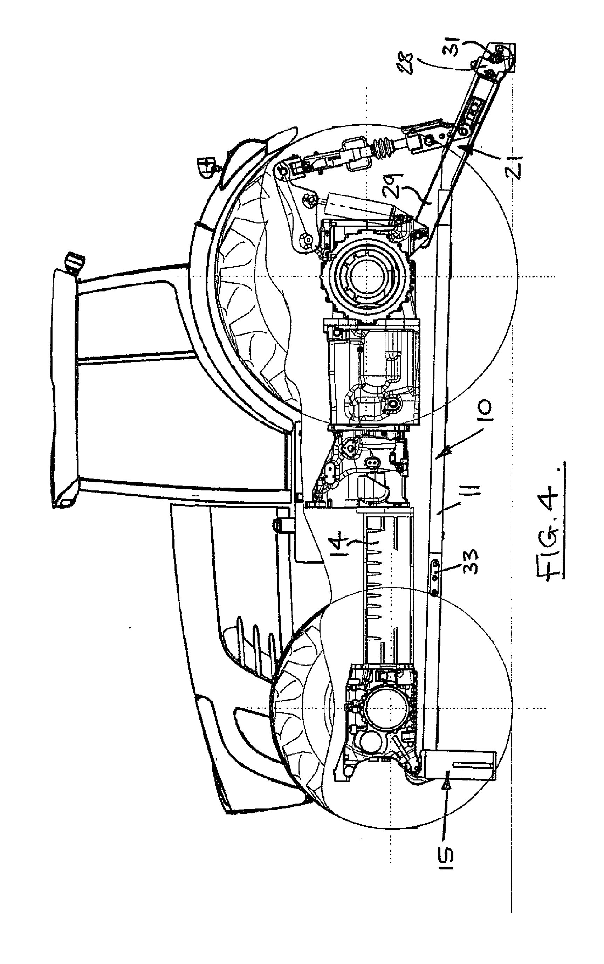

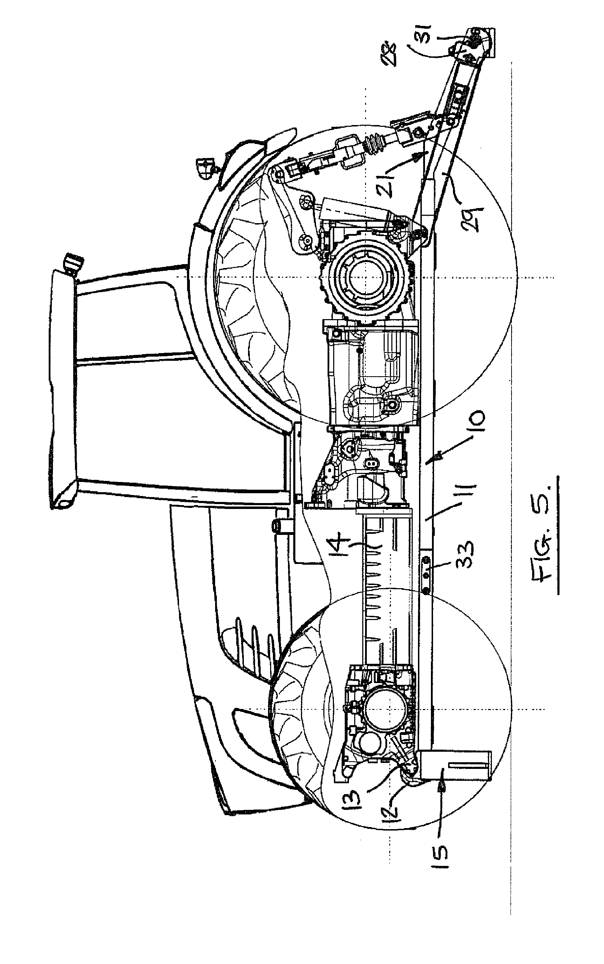

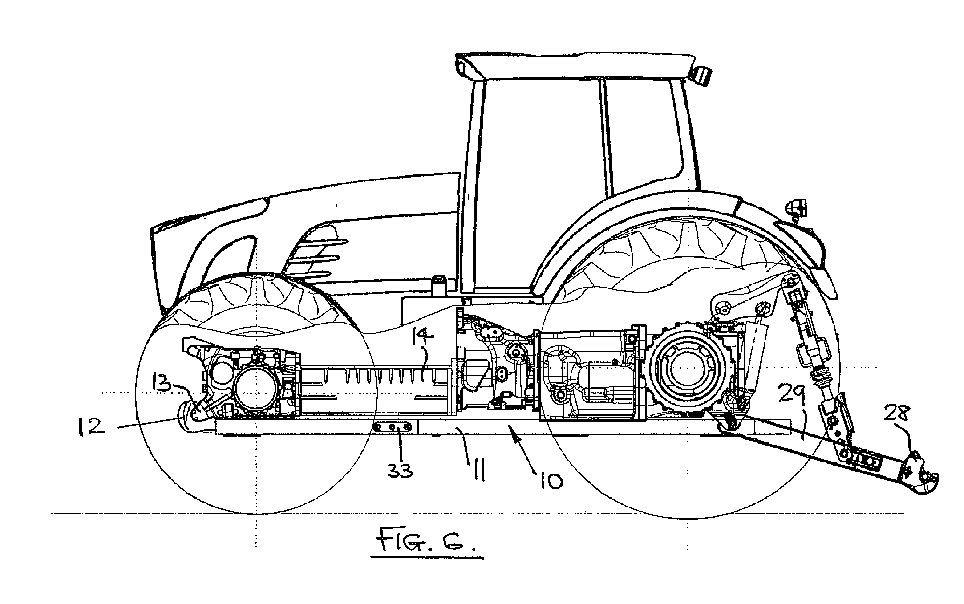

After lowering the draft links 29 the hooks 28 of the draft links 29 of the tractor are then engaged with the rear raising means in the form of crossbar 31 as shown in Figure 4 and the draft links are then raised to move the rear of the weight to its operational position in contact with the underside of the chassis 14 as shown in Figure 5. The weight is then bolted to the underside of the chassis using bolts 32 and the front and rear support legs 16 and 22 are removed by withdrawing pins 18 and 14. The weight member 11 then occupies its operational position show in Figure 6 in which it is in full contact with the underside of the tractor chassis.

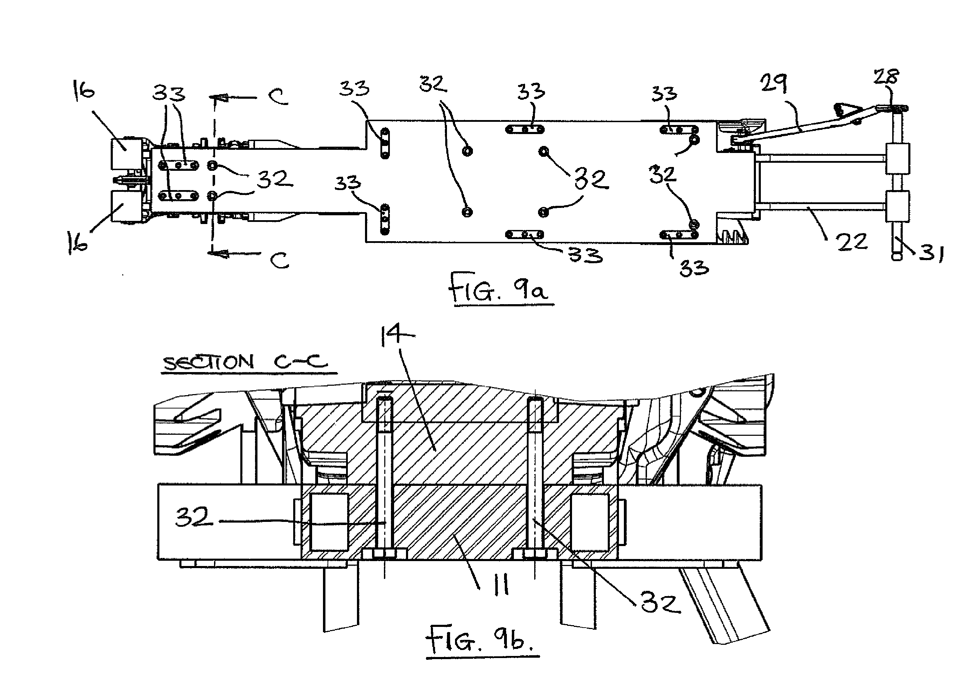

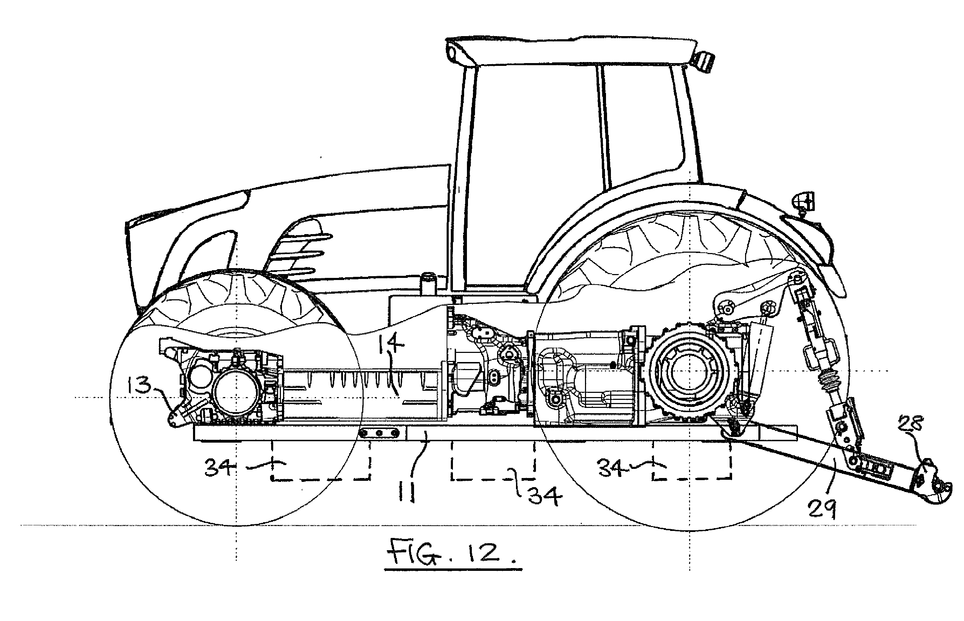

As can be seen from Figure 9a the underside of weight member 11 is provided with attachment points 33 to which additional weights or other components can be attached. Figure 12 shows diagrammatically such additional weights 34 mounted below the main weight member 11.

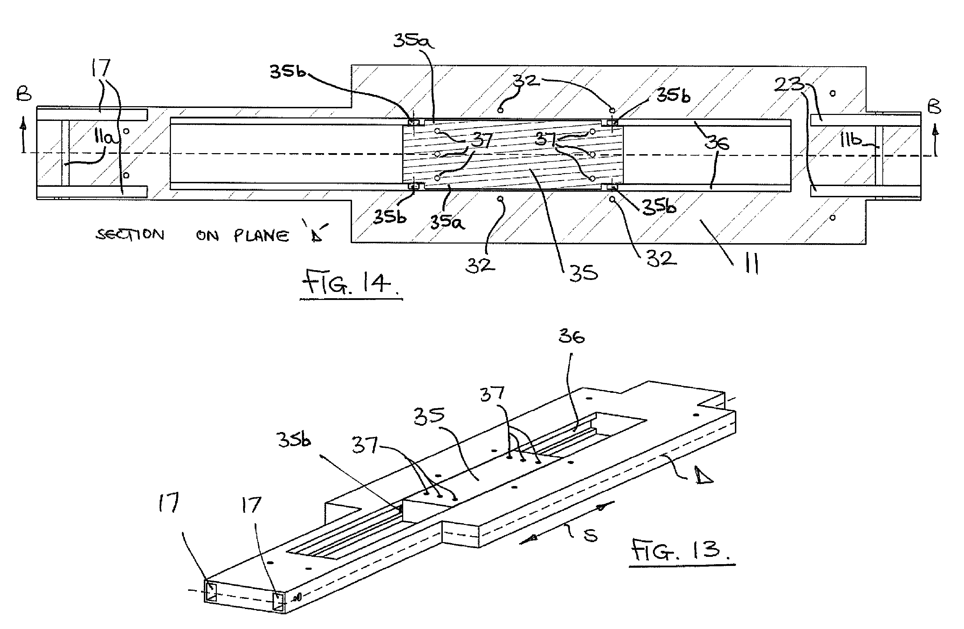

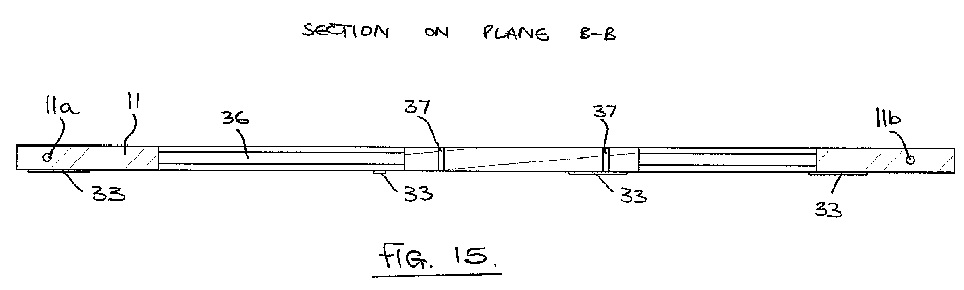

Figures 13, 14 and 15 show an alterative belly weight arrangement in which the main weight member 11 includes a moveable weight section 35 which has projecting flanges 35a and rollers 35b which slide in tracks 36 cut into the weight member 11. This allows the moveable weight section 35 to be slid in the fore and aft direction as indicated by arrow S in Figure 13 so that the ballasting of the tractor can be adjusted. The moveable weight section 35 may be provided with attachment points 37 to mount additional weights 34 similar to Figure 12. The tractor may be provided with a hydraulic ram for moving the weight section 35 in direction S. Alternatively other arrangements for moving the weight section can be provided such as an electric motor which engages a chain drive arrangement.

A further advantage of the belly weight arrangement of the present invention is that the weight connects separate parts of the tractor chassis to each other, especially the front chassis parts to rear chassis parts. Thus the overall stiffness of the chassis is improved and, the load of (additional) weights or components is thereby better distributed to the complete chassis. This contrasts with, for example, attaching weights etc. to front linkage when only the front part of the chassis can to bear the load. In addition the belly weight can be used to attach implements to the reinforced chassis. For example a dozer blade can be attached via the belly weight.

In a further embodiment (not shown) the weight member 11 is not bolted to the underside of the chassis using bolts but other attachment means such as moveable hooks or latches are provided which engage cooperating formations on the chassis to maintain the operational position of the weight member. These hooks or latches may be operated by electric or hydraulic motors to avoid manual work by the tractor operator and may be controlled from inside the cab.

## Claims

1. A tractor weight arrangement comprising a weight member designed to be mounted under a tractor chassis, and attachment means for securing the weight member in its operational position under the chassis, the arrangement being **characterised in that** the weight member has front raising means for use in raising the front of the weight to it operation position under the chassis and separate rear raising means for use in raising the rear of the weight to is operational position under the chassis, and **in that** the weight is provided with detachable support means for supporting the weight above the ground so that the front and rear raising means can be engaged to allow weight to be raised to its operational position under the chassis.

2. A weight arrangement according to claim 1 **characterised in that** separate detachable support means are provided at the front end and rear end of the weight member.

3. A weight arrangement according to claim 2 **characterised in that** the detachable support means comprises a first pair of detachable support legs located at the front end of the weight member and a second pair of detachable support legs located at the rear end of the weight member.

4. A weight arrangement according to any one of claims 1 to 3 **characterised in** the front raising means comprises a hook for engagement with a formation provided on the front portion of the tractor chassis and/or the rear the rear raising means comprises formations on the rear detachable support means for engagement by rear draft links of the tractor to allow the rear of the weight member to be raised to its operational position by raising the draft links.

5. A weight arrangement according to any one of claims 2 to 4 **characterised in that** the front and rear detachable support means are received in recesses in the weight member and are each held therein by pin which are retained in position by a screw retainer.

6. A weight arrangement according to any one of claims I to 5 **characterised in that** the tractor has a front suspension the height of which can be raised and lowered by the tractor operator, the front raising means being engageable with a cooperating formation on the chassis by the operator lowering the front suspension to engage the front raising means with a cooperating formation on the chassis and then raising the suspension to lift the front of the weight member into its operational position.

7. A weight arrangement according to any one of claims I to 6 **characterised in that** the attachment means comprise bolts which extend through holes in the weight member to attach the weight member to the underside of the chassis or moveable hooks or latches which engage cooperating formations on the chassis to maintain the operational position of the weight member.

8. A weight arrangement according to claim 7 **characterised in that** the moveable hooks or latches are operated by electric or hydraulic motors and are controlled from inside the cab.

9. A weight arrangement according to any one of claims 1 to 8 **characterised in that** the weight member includes moveable weight section which can be moved fore and aft relative to the remainder of the weight member to adjust the ballasting of the tractor.

10. A weight arrangement according to claim 9 **characterised in that** the moveable weight section is slidable in tracks formed in the remainder of the weight member.

11. A weight arrangement according to claim 9 or 10 **characterised in that** an actuating means is provided to move the moveable weight section relative to he remainder of the weight member.

12. A weight arrangement according to claim 11 **characterised in that** the actuating means comprises a hydraulic ram or an electric motor driven system for moving the moveable weight section.

13. A weight arrangement according to any one of claims 1 to 12 **characterised in that** the weight member is provided with additional attachment points to which additional weights or other components can be mounted.

14. A method of mounting a tractor weight member on the underside of a tractor chassis, said method comprising lowering a front axle of the tractor to engage front raising means on the weight member with a cooperating formation on the front of the chassis, raising the suspension to raise the front of the weight member into its operational position against the underside of the chassis, engaging rear draft links of the tractor with rear raising means on the weight member, raising the draft links to raise the rear of the weight member into its operational position against the underside of the chassis, and securing the weight member to the underside of the chassis using attachment means.

15. The method of claim 15 in which the weight member is initially supported above the ground on detachable support means which are disconnected from the weight member after the weight member has been secured to the chassis.
